# EUROPÄISCHE PATENTSCHRIFT

(11) **EP 4 154 048 B1**
(45) Veröffentlichungstag und Bekanntmachung des Hinweises auf die Patenterteilung: **31.01.2024**
(21) Anmeldenummer: 20833907.7
(22) Anmeldetag: 22.12.2020
(51) Int. Cl.: G02B 27/01, G02B 23/02, H04N 13/332, G02B 27/14, G02B 27/18, G02B 27/28

(54) **ERWEITERTE-REALITÄT-BRILLE MIT EXTERNER PROJEKTIONSFLÄCHE**
AUGMENTED REALITY GLASSES WITH EXTERNAL PROJECTION AREA
LUNETTES À RÉALITÉ AUGMENTÉE DOTÉES D'UNE ZONE DE PROJECTION EXTERNE

(30) Priorität: 20.05.2020 DE 102020206392
(43) Veröffentlichungstag der Anmeldung: 29.03.2023
(73) Patentinhaber: Gixel GmbH, 76228 Kalrsruhe (DE)
(72) Erfinder: TAPHANEL, Miro, 76228 Karlsruhe (DE); LUO, Ding, 76228 Karlsruhe (DE)
(74) Vertreter: Hernandez, Yorck
(86) Internationale Anmeldenummer: PCT/EP2020/087706
(87) Internationale Veröffentlichungsnummer: WO 2021/233568

(56) Entgegenhaltungen:
- EP-A1- 2 797 313
- WO-A1-2018/200315
- WO-A2-2012/054231
- US-A- 6 147 805
- US-A1- 2017 208 292

## Beschreibung

Die Erfindung betrifft eine Erweiterte-Realität-(ER)-Brillen-Anzeigevorrichtung zum Anzeigen eines virtuellen Bildes in einem Sichtfeld eines Nutzers der ER-Brillen-Anzeigevorrichtung, mit einer Brilleneinheit, welche ausgebildet ist vom Nutzer bei bestimmungsgemäßem Gebrauch als Brille getragen zu werden, und einer an der Brilleneinheit befestigten Projektionseinheit, welche ausgebildet ist, ein Projektionslicht von dem Nutzer fort in eine Umgebung als computergenerierte Bildinformation abzustrahlen.

### Hintergrund

Es sind ER-Brillen-Anzeigevorrichtungen, kurz ER-Brillen oder auch Augemnted-Reality-(AR)-Brillen mit Projektionseinheiten bekannt, welche das virtuelle Bild auf einer externen, raumfesten Projektionsfläche entstehen lassen. Nach diesen, beispielsweise in der US 10 404 975 A auch als "projected head mounted display" bezeichneten AR-Brillen wird ein raumfester Projektionsbildschirm genutzt und an der AR-Brille ist eine Projektionseinheit angebracht, um auf den Projektionsbildschirm eine Bildinformation zu projizieren. Aus Gründen der Lichteffizienz wird ein im Allgemeinen ein Retroreflektor (und keine diffuse reflektierende Fläche wie eine Lambert'sche Reflektionsleinwand) als Projektionsfläche verwendet. Es sind sowohl technische Umsetzungen bekannt, bei dem die Projektoren versetzt zum Auge platziert sind (siehe US 10 404 975 A, Fig. 6A) als auch technische Umsetzungen, die den Projektor mittels eines Strahlteilers koaxial in das Sichtfeld des Auges einspiegelt (siehe US 10 404 975 A, Abb. 7A). Ähnliche Lösungen beschreiben auch die US 6 147 805 A, US 5 621 572 A, US 10 139 644 A und US 2014 / 0 340 424 A. Diese Ansätze haben sämtlich den Nachteil, dass keine perfekte Illusion eines freischwebenden virtuellen Bildes möglich ist. Ähnlich wie bei einem 3D Fernseher ist immer auch die Projektionsfläche sichtbar und erinnert den AR-Brillenträger daran, wie dieses Bild technisch entsteht.

Es ist bekannt, dass ein Retroreflektor nie perfekt ist (vgl. US 2014 / 0 340 424 A, Fig.4 und US 6 147 805 A, Figs. 15 und 16). Bei einem nicht perfekten Retroreflektor wird nicht alles Licht genau zur aussenden Lichtquelle zurückgesandt, sondern die eingestrahlte Lichtenergie zu einem Teil auch in andere benachbarte Winkel verteilt. Eine perfekte Retroreflektorfläche würde das Licht nur in die Richtung zurück reflektieren, aus der das (Projektions-) Licht auf die Retroreflektorfläche trifft. Reale Retroreflektorflächen streuen jedoch immer auch Licht ("imperfections in the retroreflective screen 723", siehe auch Figs. 7A, 7B der US 10 404 975 A). Ursachen sind zum einen Fertigungsbedingte Toleranzen als auch Beugungseffekte, die sich aufgrund der Mikrooptiken der Retroreflektorflächen ergeben. Somit handelt es sich um ein fundamentales physikalisches Problem. Die Reflektion erfolgt aber immer noch deutlich fokussierter als mit einer Lambert'schen Projektionsleinwand, bei der keine bevorzugte Reflektionsrichtung existiert.

Allerdings wird die mangelnde Güte der Retroreflektorflächen in den hier relevanten Anwendungen aktiv genutzt: In US 2014 / 0 340 424 A ist eine Projektionsbrille gezeigt, die eben nicht mittels Strahlteilerelementen versucht das reflektierte Projektionslicht exakt an der Position der Augenpupille koaxial einzukoppeln, sondern die Projektoreinheit versetzt zur Pupille des Auges positioniert. Damit in dieser Konstellation ein sichtbares virtuelles Bild erzeugt werden kann, darf kein perfekter Retroreflektor eingesetzt werden, da sonst das Projektionslicht nicht in die Pupille und damit das Auge, sondern ausschließlich in die Projektoreinheit zurückreflektiert würde. Durch die mangelnde Güte der Retroreflektoren wird so auch das Problem gelöst, dass das Auge zwar eine definierte Augenpupille besitzt, diese sich aber aufgrund der Augapfel-Rotation in ihrer Position verändert. Die mangelnde Güte der Retroreflektorflächen ermöglicht somit, dass die Projektoreinheit nicht perfekt im Auge positioniert werden muss. Das ist auch notwendig, da sich zum einen das Auge dreht und somit die Pupille permanent ihre Position verändert, zum anderen jeder Mensch einen individuellen Augenabstand hat. AR-Brillen spezifizieren für diesen Aspekt eine sogenannte Eye-Box. Dabei wird ein Volumen definiert, in dem sich die Augenpupille befinden muss, damit das Licht der AR-Brille gesehen werden kann.

In der US 6 147 805 A wird darauf hingewiesen, dass insbesondere zur stereographischen Projektion von zwei Bildern, das heißt zur dreidimensionalen Darstellung eines virtuellen Bildes, dieser Effekt einer nicht perfekten Retroreflektion beachtet werden muss. Denn dadurch ist es nicht mehr möglich mit zwei Projektoren zu arbeiten, bei welchen Licht des rechten Projektors nur in das rechte Auge zurückreflektiert wird und Licht vom linken Projektor ausschließlich in das linken Auge zurückreflektiert wird. Es wird des Weiteren darauf hingewiesen, dass das Übersprechen von einem Auge zum anderen Auge auch von der Distanz zum Retroreflektor abhängt. Ist der Retroreflektor nahe genug und die Rückstrahlkeule, d.h. der Raumwinkel in welchen der Retroreflektor einen Lichtstrahl reflektiert, klein genug, lässt sich theoretisch ein Übersprechen verhindern. In der Praxis hat sich gezeigt, dass kommerziell wirtschaftlich produzierte Retroreflektoren keine ausreichend hohe Güte besitzen. Somit kommt es nachteilig zu einem Übersprechen von Bildinformationen die ausschließlich für das rechte Auge bestimmt sind, jedoch auch vom linken Auge gesehen werden können. Für im Bereich der AR-Brillen relevante Entfernungen zwischen Retroreflektor und Projektor in der Größenordnung von einem Meter, ist der Effekt so groß, dass zusätzliche Maßnahmen notwendig sind. Dies gilt besonders für das Erzeugen virtueller Bilder in großen Sichtfeldern, die mit einer großen Bewegung des Augapfels korrespondieren. Dort ist eine besonders große Rückstrahlkeule des Retroreflektors, das heißt der Retroreflexionsfläche, notwendig. Mittels Multiplex-Verfahren kann sichergestellt werden, dass für das rechte Auge bestimmte Bildinformationen nur in das rechte Auge gelangen.

Die US 2014 / 0 340 424 A schlägt dazu ein Polarisations-Multiplex-Verfahren, ein zeitliches Multiplex-Verfahren oder ein Wellenlängen-Multiplex-Verfahren vor. Nachteilig ist jedoch, dass die dazu notwendigen optischen Elemente eine verringerte optische Transparenz haben. Somit wird die natürliche Umgebung dunkler wahrgenommen. Zudem hat jedes Multiplex-Verfahren spezifische Bildverschlechterungseffekte. Beim Polarisations-Multiplex-Verfahren kommt es bei Betrachtung von LCD-Bildschirmen oder OLED Bildschirmen zu polarisationsabhängig Verringerung der Transparenz. Beim Wellenlängen-Multiplex-Verfahren wie es zum Beispiel in der US 7 832 869 A gezeigt ist sind Farbveränderungen die Folge. Beim zeitlichen Multiplex-Verfahren kommt es zu einem Flimmern. Im Falle einer AR-Brille ist dies besonders nachteilig, denn diese Bildverschlechterungen betreffen auch die Betrachtung der natürlichen Umgebung.

Beim Polarisations-Multiplex-Verfahren wird ein polarisationserhaltender Projektionsschirm als Reflexionsfläche eingesetzt. Zudem werden zwei Projektoreinheiten eingesetzt, welche orthogonal zueinander polarisiertes Projektionslicht aussenden. In den Brillengläsern ist dann ein je ein Polarisations-Filterelement notwendig, um reflektiertes Projektionslicht für das rechte Auge am linken Auge vollständig zu absorbieren und umgekehrt. Prinzipiell möglich sind sowohl eine lineare Polarisationskodierung, als auch zirkulare Polarisationskodierung. Werden diese in den Strahlengang zur Betrachtung der realen Welt in einer AR-Brille positioniert, dann wird das Licht aus der betrachteten Umgebung entsprechend gefiltert. Da dieses unpolarisiert ist, ist ein erster Effekt, dass 50% des Lichtes verloren geht und somit das Gefühl einer starken Sonnenbrille entsteht. Ein weiteres Problem ergibt sich bei der Betrachtung von LCD- oder OLED-Bildschirmen. Diese senden entweder linear oder zirkular polarisiertes Licht aus, weswegen die Brille dieses Licht auch blockieren kann. Aus diesem Grund ist ein Polarisations-Multiplex-Verfahren für reale Objekte im Sichtfeld der bekannten AR-Brillen nachteilhaft.

Zeitliche Multiplex-Verfahren verwenden je einen optischen Shutter, ein Verschluss-Filterelement, pro Auge. Der rechte Shutter ist offen, wenn das Bild für das rechte Auge angezeigt wird. Und schließt für die gleiche Zeitspanne, wenn das Bild für das linke Auge angezeigt wird. Entsprechend resultiert eine Transparenz der Brille von ungefähr 50%. Beachtet man bei dieser Abschätzung zusätzlich, dass typischer Weise LCD-Shutter eingesetzt werden, welche einen Polarisationsfilter beinhalten, dann ergibt sich eine Transparenz von ungefähr 25%. Denn allein der notwendige Polarisationsfilter absorbiert 50% des Umgebungslichts und sorgt entsprechend für die gleichen Nachteile wir beim Polarisations-Multiplex-Verfahren. Zusätzlich kann das schnelle Öffnen und Schließen des Shutters pro Auge zu einem Flimmer-Effekt führen, der als unangenehm für den Betrachter empfunden wird. Zusätzlich problematisch ist auch die Verwendung einer Kamera zum Filmen des AR-Brillennutzers oder - Trägers. Diese besitzt eine Bildwiederholrate, die nicht mit der Shutter-Brille synchronisiert ist. Je nach Frequenzunterschied zwischen Shutter und Bildwiederholrate bleibt eines der beiden Augen im Kamerabild länger schwarz, wobei dieser Effekt langsam von einem Auge zum anderen Auge springen kann. Auch dieser Effekt wirkt sehr irritierend auf dem Betrachter.

Wellenlängen-Multiplex-Verfahren bedingen, dass zwei Projektionseinheiten eingesetzt werden, welche unterschiedliche Wellenlängen verwenden. Ein wellenlängenabhängiges Filterelement, ein Wellenlängen-Filterelement, muss dann vor den Augen dafür sorgen, dass nur das Projektionslicht der "rechten" Projektoreinheit in das rechte Auge gelangt. Alle (anderen) Wellenlängen der "linken" Projektoreinheit müssen hingegen blockiert werden. Bei einer AR-Brille, wird jedoch auch das Umgebungslicht entsprechend gefiltert. Somit wird ungefähr die Hälfe des sichtbaren Spektralbereichs pro Auge blockiert und es resultiert eine Transparenz der Brille von ungefähr 50%. Wird ein solches Wellenlängen-Multiplex-Verfahren für eine AR-Brille eingesetzt und die reale Welt durch die entsprechenden Filterelemente betrachtet, dann resultieren überdies Farbveränderungen bei der Betrachtung der realen Welt, da die Wellenlängen-Filterelement nicht das gesamte Spektrum hindurch lassen, sondern nur einzelne Spektralbereiche. Das liegt daran, dass die spektrale Verteilung von Licht in der realen Welt nicht kontrolliert werden kann. Jedes Auge schließt dann aufgrund der unterschiedlichen Filter andere spektralen Bereiche aus. Somit ergibt sich nicht nur eine Farbveränderung, sondern auch eine unterschiedliche Farbveränderung pro Auge. Im extremen Fall kann beispielsweise ein Laserpointer in einer Konferenz-Besprechungs-Situation nur von einem Auge gesehen werden, weil die Wellenlänge des Laserpointers gerade für das andere Auge blockiert wird.

Es ist somit insbesondere kein Multiplex-Verfahren für AR-Brillen bekannt, welches, ganz abgesehen von den anderen genannten Nachteilen, eine Brillentransparenz von mehr als 50% ermöglicht.

Der vorliegenden Erfindung liegt die Aufgabe zu Grunde, die für Erweiterte-Realität-Brillen-Anzeigevorrichtungen, AR-Brillen, bekannten Nachteile zu überwinden und damit neue Anwendungsfelder für AR-Brillen zu erschließen, insbesondere im Bereich der Telepräsenz-Kommunikation.

Diese Aufgabe wird durch die Gegenstände der unabhängigen Patentansprüche gelöst. Vorteilhafte Ausführungsformen ergeben sich aus den abhängigen Patentansprüchen, der Beschreibung und den Figuren.

Ein Aspekt betrifft Erweiterte-Realität-Brillen-Anzeigevorrichtung, ER-Brillen-Anzeigevorrichtung, zum Anzeigen eines virtuellen Bildes in einem natürlichen Sichtfeld eines Nutzers, das heißt eines Trägers, der ER-Brillen-Anzeigevorrichtung. Das natürliche Sichtfeld kann sich dabei aus dem Gesichtsfeld des Nutzers ableiten, dieses sein oder ihm entsprechen. Die horizontale Ausdehnung des Gesichtsfelds kann beispielweise etwa 214° (±107° auf jeder Seite), die vertikale Ausdehnung etwa 60°-70° nach oben und 70°-80° nach unten betragen. Für die Bestimmung des Sichtfeldes wird bevorzugt ein fixierter Augapfel angenommen, oder ein in seiner Bewegung in vorgegebener Weise beschränkter Augapfel.

Die ER-Brillen-Anzeigevorrichtung hat einer Brillen(gestell)einheit, welche ausgebildet ist vom Nutzer bei bestimmungsgemäßem Gebrauch der ER-Brillen-Anzeigevorrichtung als oder nach Art einer Brille getragen zu werden. Dies schließt im Rahmen dieser Offenbarung auch das Tragen als sogenanntes "Headset", wie es beispielsweise von Virtuelle-Realität-Brillen-Anzeigevorrichtungen (sogenannten "VR-Brillen" oder auch der Microsoft "Hololens") bekannt ist, ein. Diese ist als Gestell und damit Halterung für die weiteren Einheiten der ER-Brillen-Anzeigevorrichtung ausgebildet. Die ER-Brillen-Anzeigevorrichtung weist auch eine an der Brilleneinheit angeordneten und damit an dieser befestigte Projektionseinheit auf, welche ausgebildet ist, ein Projektionslicht von dem Nutzer fort in eine Umgebung der ER-Brillen-Anzeigevorrichtung entlang einer ersten Richtung als computergenerierte Bildinformation abzustrahlen. Die computergenerierte Bildinformation bestimmt den Inhalt des durch die ER-Brillen-Anzeigevorrichtung angezeigten virtuellen Bildes. Hat das Projektionslicht die Form eines Strahlbündels oder Strahlkegels, kann die entsprechende Richtung der Richtung eines zugeordneten Zentralstrahls entsprechen.

Die Projektionseinheit ist ausgebildet, das Projektionslicht in einen Umgebungsbereich der ER-Brillen-Anzeigevorrichtung abzustrahlen, welcher sich bei bestimmungsgemäßem Gebrauch der ER-Brillen-Anzeigevorrichtung im Wesentlichen oder vollständig außerhalb des Sichtfeldes des Nutzers befindet. Unter "im Wesentlichen" kann hier und im Folgenden "zu einem vorgegebenen Anteil, welcher zumindest 50%, bevorzugt zumindest 75%, besonders bevorzugt zumindest 95%, beträgt" verstanden werden.

An der Brilleneinheit ist innerhalb des Sichtfeldes des Nutzers eine Umlenkeinheit angeordnet, welche ausgebildet ist, einen von einer Reflexionsfläche in dem im Wesentlichen außerhalb des Sichtfeldes des Nutzers angeordneten Umgebungsbereich zum Nutzer zurück reflektierten Anteil des Projektionslichtes entlang einer von der ersten verschiedenen zweiten Richtung zumindest anteilig in zumindest ein Auge des Nutzers zu lenken. Damit entsteht für den Nutzer in seinem Sichtfeld durch die computergenerierte Bildinformation ein virtuelles Bild. Die Umlenkeinheit kann also den durch die Reflexionsfläche zurück zum Nutzer reflektierten Anteil des Projektionslichtes zu einem Teil in ein Auge (das dann einen Unter-Anteil des reflektierten Anteils des Projektionslichtes empfängt) und/oder zu einem Teil in das andere Auge (das dann einen anderen Unter-Anteil des reflektierten Anteils des Projektionslichtes empfängt) des Nutzers umlenken. Die computergenerierten Bildinhalte können, insbesondere für ein dreidimensionales virtuelles Bild, unterschiedlich sein, oder identisch.

Das umgelenkte Projektionslicht kann zuvor von einer unten näher beschrieben Multiplex-Filtereinheit gefiltert werden. Erste und zweite Richtung unterschieden sich dabei bevorzugt um zumindest 45°, bevorzugt zumindest 65°, besonders bevorzugt zumindest 85°. Die erste Richtung kann bei bestimmungsgemäßem Gebrauch der ER-Brillen-Anzeigevorrichtung mit aufrechter Körperhaltung des Nutzers bis auf eine vorgegebene Abweichung von beispielsweise höchstens 5° oder höchstens 25° vertikal verlaufen. Die zweite Richtung kann bei bestimmungsgemäßem Gebrauch der ER-Brillen-Anzeigevorrichtung mit aufrechter Körperhaltung des Nutzers bis auf eine vorgegebene Abweichung von beispielsweise höchstens 5° oder höchstens 25° horizontal verlaufen. Die Umlenkeinheit kann ein oder mehrere Strahlteiler-/Strahlkombinierelemente aufweisen, welche Licht aus der ersten Richtung und Licht aus der zweiten Richtung in der zweiten Richtung zum Nutzer hin lenken.

Die beschriebene ER-Brillen-Anzeigevorrichtung überwindet die aus dem Stand der Technik bekannten Probleme also dadurch, dass die Projektionseinheit das Projektionslicht nicht in Richtung der natürlichen Sichtstrahlen des Auges aussendet, sondern nach oben aus dem Sichtfeld hinaus. Das von oben zurückreflektierte Bild kann über die Umlenkeinheit vom Nutzer gesehen werden. Diese Konstellation hat den neuen Effekt, dass ein Gegenüber nicht geblendet werden kann in Kombination mit dem neuen Effekt, dass gleichzeitig ein Multiplexverfahren realisiert werden kann, dass nicht im Strahlengang aus der realen Umgebung, also aus dem Sichtfeld des Nutzers, eingebracht ist. Es ist somit möglich, die das Multiplex-Verfahren umsetzende Multiplex-Filtereinheit nicht nur im Sichtfeld und damit in einem Strahlengang von realen Bildern der Umgebung des Nutzers anzuordnen, sondern auch teilweise oder sogar vollständig außerhalb des Sichtfelds des Nutzers. Insbesondere für Kommunikationsanwendungen ergeben sich daraus vielfältige Vorteile.

So können die bisher bekannten AR-Brillen im Gegensatz zur vorgestellten ER-Brillen-Anzeigevorrichtung nicht für eine Kommunikations-Situation eingesetzt werden. Die Projektionseinheit sendet dort nämlich vergleichsweise helles Licht in Richtung des Kommunikationspartners aus. Das ist insbesondere in einem Anwendungsfall relevant, bei dem sich mehrere Personen physikalisch im gleichen Raum befinden und mit einer weiteren Gruppe virtuell verbunden sind. Dabei bezieht sich die Kommunikation-Situation auf eine Telepräsenz-Situation, bei welcher die Gesprächspartner weit voneinander entfernt verortet sind und nur über eine Internet-Verbindung miteinander verbunden. Bei der Telepräsenz-Kommunikation wird mittels einer (3D-Stereo-) Kamera der jeweilige Kommunikationspartner gefilmt und der (3D-)Video-Stream latenzarm zum Gegenüber übertragen. Die AR-Brille übernimmt die Funktion der Darstellung dieses (3D-)Video-Streams. Somit sehen die Gesprächspartner sich, insbesondere in 3D und lebensgroß in der jeweiligen lokalen Umgebung. Hierdurch ergibt sich die Illusion, man würde sich tatsächlich physisch gegenübersitzen.

Gerade die für die Situation der Telepräsenz-Kommunikation spezifischen Probleme können mit der beschriebenen Konstellation überwunden werden:
1.) Die Mimik und insbesondere die Augen müssen als Körpersprache in einer Kommunikationssituation gut sichtbar sein. Die AR-Brille muss daher eine hohe Transparenz aufweisen, damit die Kamera bzw. das Gegenüber sowohl Mundregion als auch Augenregion übertragen kann. In der beschriebenen Lösung ist nur die Umlenkeinheit zwischen dem Auge des Nutzers und der Kamera bzw. dem Betrachter. Mit der beschriebenen Konfiguration kann selbst bei einem dreidimensionalen virtuellen Bild, welches ein Multiplex-Verfahren erfordert, eine Transparenz von ungefähr 80% erreicht werden. 80% Transmission stellt dabei eine weiche Grenze für Brillen dar, die noch nicht als Sonnenbrillen wahrgenommen werden.
2.) Licht des Displays der AR-Brille darf nicht in Richtung des Gegenübers, bzw. in Richtung der Kamera ausgekoppelt werden. In diesem Fall wären die Augen nicht sichtbar, sondern nur ein starker Lichtreflex. In der beschriebenen Lösung wird das Projektionslicht vertikal nach oben abgestrahlt, also nicht in Richtung eines Gegenübers, sodass sich mehrere Personen im gleichen Raum befinden können und sich beim gegenseitigen Betrachten nicht gegenseitig blenden. Für den Fall, dass der Träger der AR-Brille seinen Kopf sehr stark nach vorne neigt kann der Projektor entsprechend einer unten erläuterten Ausführungsform lokal abgedunkelt werden.
3.) Die durch die AR-Brille wahrgenommene Umgebung sollte nicht wesentlich dunkler sein als das entsprechend der computergenerierten Bildinformation in der Umgebung angezeigte virtuelle Bild. Die beschriebenen Konfiguration ermöglicht, wie auch weiter unten konkret ausgeführt, den Einsatz eines optischen Multiplex-Verfahrens, bei welchem im für die Wahrnehmung der realen Welt genutzten Strahlengang keine zusätzlichen Filter-Elemente angeordnet werden müssen. Dadurch kann auch bei einem dreidimensionalen virtuellen Bild eine signifikant höhere Transparenz der AR-Brille erreicht werden. Auch ergeben sich so keine Artefakte bei der Betrachtung von Bildschirmen und weitere Nachteile der bekannten Multiplex-Verfahren entfallen, sodass die Bildqualität insgesamt verbessert ist.
4.) Die AR-Brille sollte möglichst klein und einfach aufgebaut sein. Zur Darstellung von Farbbildern werden typischer Weise Displays oder Projektoren eingesetzt, die alle drei Farben Blau, Grün und Rot darstellen können. Mikro-LED-Displays sind jedoch einfacher herzustellen, wenn nur eine Farbe realisiert wird. Daher werden typischer Weise drei dieser einfarbigen Mikro-LED-Displays mittels wellenlängenabhängiger Strahlteiler zuerst kombiniert und dann erst durch eine Optik projiziert, beispielsweise durch einen sogenannten x-Cube Strahlteiler Würfel, wie er in 3LCD-Beamern zum Einsatz kommt. Mit der Erfindung können auch separate monochrome Mikro-LED-Displays eingesetzt werden, mit der sowieso vorhandenen Umlenkeinheit kann ein Bauteil wie der x-Cube Strahlteiler eingespart werden.

In einer vorteilhaften Ausführungsform ist entsprechend eine an der Brillengestelleinheit angeordnete Multiplex-Filtereinheit vorgesehen, welche ausgebildet ist, den in der Umgebung der ER-Brillen-Anzeigevorrichtung zum Nutzer zurück reflektierten Anteil des Projektionslichtes zumindest teilweise, nämlich in den Teilen, die durch die Umlenkeinheit zu dem oder den Augen umgelenkt werden, entsprechend einem Multiplex-Verfahren zu filtern. Entsprechend filtert die Multiplex-Filtereinheit, Licht, welches sich in einer dritten Richtung ausbreitet, wobei die dritte Richtung bis auf eine vorgegebene Abweichung der umgekehrten ersten Richtung entspricht. Die dritte Richtung verläuft somit wie die erste Richtung bei bestimmungsgemäßem Gebrauch im Wesentlichen vertikal. Die vorgegebene Abweichung zwischen erster und dritter Richtung kann beispielsweise höchstens 5°, höchstens 10°, höchstens 25° oder höchstens 35° betragen. Die Multiplex-Filtereinheit ist bevorzugt im Wesentlichen oder vollständig außerhalb des Sichtfeldes des Nutzers angeordnet. Insbesondere filtert die Multiplex-Filtereinheit die entsprechenden Teile des Lichtes bevor der zurück reflektierte Anteil des Projektionslichtes durch die Umlenkeinheit umgelenkt wird, ist die Multiplex-Filtereinheit also in einem Strahlengang des reflektierten Anteils des Projektionslichtes zwischen Reflexionsfläche und Umlenkeinheit angeordnet. Alternativ oder ergänzend ist die Multiplex-Filtereinheit ganz oder teilweise im Sichtfeld des Nutzers angeordnet. Dies kann insbesondere realisiert werden, indem ein Element der Umlenkeinheit, beispielsweise ein Strahlteilerelement, ausgebildet ist zugleich ein Filterelement der Multiplex-Filtereinheit zu sein oder ein solches zu umfassen, beispielsweise ein Verschlusselement ("Shutter"). Der zurückreflektierte Anteil kann also insbesondere zugleich umgelenkte und gefiltert werden. Ist die Multiplex-Filtereinheit teilweise im und teilweise außerhalb des Sichtfelds des Nutzers angeordnet, können beispielsweise ein oder mehrere Filterelemente der Multiplex-Filtereinheit im und ein oder mehrere Filterelemente der Multiplex-Filtereinheit außerhalb des Sichtfeldes angeordnet sein.

Das hat den Vorteil, dass wie oben genauer ausgeführt dreidimensionale virtuelle Bilder bei einer hohen Transparenz dargestellt werden können. Auch kann die Multiplex-Filtereinheit entsprechend zumindest zwei für ein Polarisations-Multiplex-Verfahren ausgebildete Polarisations-Filterelemente und/oder zumindest zwei für ein Wellenlängen-Multiplex-Verfahren ausgebildete Wellenlängen-Filterelemente und/oder zumindest zwei für ein zeitliches Multiplex-Verfahren ausgebildete Verschluss-Filterelemente aufweisen, wobei die im Stand der Technik für eine Telepräsenz-Kommunikation auftretenden Nachteile vermieden werden. Die Filterelemente können sämtlich oder teilweise von der Umlenkeinheit beabstandet angeordnet sein, beispielsweise mit einem Abstand von mehr als 5mm oder mehr als 15mm. Die jeweiligen Filterelemente können insbesondere eine horizontal verlaufende Haupterstreckungebene aufweisen. Bei für ein zeitliches Multiplex-Verfahren geeigneten Verschluss-Filterelementen weisen diese zwei Filterelement-Gruppen auf, wobei jede Gruppe entsprechend dem Multiplex-Verfahren einem Auge zugeordnet ist und zumindest ein Filterelement umfasst. Besonders vorteilhaft ist es, dass jede Gruppe eine Vielzahl von beispielsweise mehr als 10, insbesondere mehr als 100, besonders bevorzugt mehr als 1000, unabhängig voneinander schaltbare Verschluss-Filterelemente umfasst. Diese können pixelförmig oder linienförmig gestaltet sein und entsprechend als Verschluss-Filterelement-Matrix bzw. Verschluss-Filterelement-Zeilen, also Pixel- oder Zeilen-Array, angeordnet sein. Bevorzugt weist die Multiplex-Filtereinheit oder die Filterelement-Gruppen eine horizontale oder im Wesentlichen horizontale Haupterstreckungsebene auf.

Mit den Angaben "oben", "unten", "vorne", "hinten, "horizontal", "vertikal", etc. sind die bei bestimmungsgemäßen Gebrauch und bestimmungsgemäßem Anordnen der Vorrichtung und bei einem dann vor der Vorrichtung/Gerät stehenden und in Richtung der Vorrichtung/Gerät blickenden Beobachter gegebenen Positionen und Orientierungen angegeben.

In einer weiteren vorteilhaften Ausführungsform ist vorgesehen, dass die Umlenkeinheit zumindest ein Strahlteilerelement und ein Spiegelelement aufweist, wobei das Spiegelelement und das zumindest eine Strahlteilerelement jeweils ausgebildet sind, den zum Nutzer zurück reflektierten Anteil des Projektionslichtes zu einem entsprechenden Teil in das Auge des Nutzers zu lenken. Das Spiegelelement besitzt dabei eine Teildurchlässigkeit, sodass das Licht teilweise reflektiert wird und teilweise transmittiert wird. Vorteilhafter Weise sind das oder die Strahlteilerelemente und das Spiegelelement dabei bei in der ersten Richtung übereinander angeordnet, sodass ein Teil des reflektierten Anteils des Projektionslichtes sich konsekutiv durch das oder die Strahlteilerelemente zum Spiegelelement ausbreitet. Dann lenkt das zumindest eine Strahlteilerelement einen Teil des reflektierten Anteils ins Auge, und einen anderen Teil zum Spiegel. Bei mehreren Strahlteilerelementen wird je ein Teil ins Auge und ein Teil zum in der ersten Richtung dahinterliegenden nächsten Strahlteilerelement geleitet, bis das letzte Strahlteilerelement einen Teil ins Auge und den verbleibenden Teil zum Spiegelelement lenkt. Damit kann eine besonders kompakte, insbesondere wie von Brillen gewohnte flache Bauform mit verringertem Gewicht erreicht werden.

Alternativ oder ergänzend zum Spiegelelement kann ein Strahlfallenelement vorgesehen sein, welches sich in der ersten Richtung ausbreitendes Licht absorbiert. Somit können Reflexionen der Umgebung in der Umlenkeinheit bzw. dem oder den Strahlteilerelementen vermieden werden, welche effektiv bewirken würden, dass das Auge des Nutzers von einem Beobachter in der Umgebung nicht oder nur mit verringertem Kontrast sichtbar wäre.

Die Umlenkeinheit kann auch Spiegelelemente oder Strahlteilerelemente aufweisen, welche schaltbar sind. Dabei können die jeweiligen Elemente entsprechend der durch die Anordnung der Augen vorgegebenen Horizontalen nebeneinander angeordnet sein, sodass jeweils eines der Elemente einem Auge zugeordnet ist. Im Falle eines zeitlichen Multiplex-Verfahrens handelt es sich um ein jeweiliges Spiegelelement, das durch Anlegen einer Spannung transparent geschaltet werden kann. Im Falle eines Polarisations-Multiplex-Verfahrens handelt es sich um Polarisations-Strahlteilerelemente, welche orthogonal zueinander polarisiert sind. Im Fall eines Wellenlängen-Multiplex-Verfahrens handelt es sich bei den Elementen beispielsweise jeweilige Interferenzfilter, die für das rechte und linke Auge unterschiedliche Wellenlängen reflektieren. Die Umlenkeinheit kann hier auch nur jeweils ein einziges Paar solcher den beiden Augen zugeordneter Spiegelelemente oder Strahlteilerelemente aufweisen. Erreicht wird damit, dass der für dreidimensionale virtuelle Bilder nutzbare horizontale Sichtbereich größer gewählt werden kann.

In einer anderen vorteilhaften Ausführungsform ist vorgesehen, dass die Projektionseinheit zwei Projektionselement-Gruppen aufweist, welche jeweils einem Auge des Nutzers zugeordnet sind, wobei jede Projektionselement-Gruppe zumindest ein Projektionselement aufweist, durch welches eine jeweilige Projektionslichtkomponente in die Umgebung abstrahlbar ist, wobei insbesondere die Projektionselemente in einer Linie angeordnet sind. Durch die Anordnung in einer Linie, welche bevorzugt quer zu erster und zweiter Richtung verläuft, kann bei mehreren Projektionselementen die Distanz zur jeweils zugeordneten Pupille verringert werden, was die Lichteffizienz erhöht. Dabei wird die Gesamtkomplexität im Vergleich zu einer Projektionseinheit mit einem einzigen lichtabstrahlenden Projektionselement erhöht. Durch die beiden unterschiedlichen Projektionselement-Gruppen kann die Bildqualität bei einem dreidimensionalen virtuellen Bild verbessert werden.

Dabei kann insbesondere vorgesehen sein, dass die Projektionselement-Gruppen jeweils drei verschiedenartige Projektionselemente aufweisen, welche ausgebildet sind eine jeweils spezifische, also verschiedenartige Projektionslichtkomponente abzustrahlen, insbesondere Projektionslichtkomponenten unterschiedlicher Farben, also unterschiedlicher Wellenlängen oder Wellenlängenbereiche. Bevorzugt können die Projektionselemente einer Gruppe jeweilige Projektionslichtkomponente mit einer roten und einer grünen und einer blauen Farbe abstrahlen, sodass die Projektionselemente einer Gruppe ein RGB-Spektrum abdecken, wie es in Bildsignalen weit verbreitet ist. Das hat den Vorteil, dass technisch einfache monochrome Projektionselemente verbaut werden können. Beispielsweise kann ein monochromatischer MicroLED Bildschirm mit einer Linse versehen werden. Es müssen dann also nicht erst 3 monochrome Bildschirme mit Hilfe eines dichroitischen X-Cube erst kombiniert werden und dann eine Linse angebracht werden. Da der X-Cube entfällt, kann die Linse näher an den Bildschirm angebracht werden. Dies ist zum einen für die Auslegung entsprechender Objektive vorteilhaft. Zum anderen kann auch eine kürzere Brennweite realisiert werden. Diese hat den Effekt, dass die hyperfokale Entfernung früher erreicht wird. Somit besitzt die Projektionseinheit eine größere Tiefenschärfe, was wiederum vorteilhaft für die Anwendung in einer AR-Brille ist. Denn durch die Kopfbewegung ist der Abstand zur Reflexionsfläche nicht konstant und somit ein ausreichend großer Schärfe-Bereich notwendig. Zudem sind MicroLED Displays besonders vorteilhaft, da sie sehr klein hergestellt werden können.

In einer weiteren vorteilhaften Ausführungsform ist vorgesehen, dass eine an der Brilleneinheit angeordnete Lagesensoreinheit, welche ausgebildet ist eine Lage und/oder Lageveränderung der Brilleneinheit zu erfassen, wobei die Projektionseinheit ausgebildet ist, das Projektionslicht in Abhängigkeit der von der Lagesensoreinheit erfassten Lage und/oder Lageveränderung abzustrahlen. Der Begriff der Lage kann einen Ort und/oder eine Orientierung umfassen. Damit wird eine flexiblere und insbesondere auch sicherere Anwendung der ER-Brillen-Anzeigevorrichtung ermöglicht.

Es kann hier nämlich vorgesehen sein, dass die Lagesensoreinheit ausgebildet ist, einen Kippwinkel der Brilleneinheit gegenüber einer Vertikalachse des Nutzers und/oder eine Rotation um die Vertikalachse mit einem entsprechenden Rotationswinkel zu erfassen, wobei insbesondere die Projektionseinheit ausgebildet ist, Projektionslicht nur in und/oder bei einem Kippwinkel abzustrahlen, welcher geringer ist als ein vorgegebener Grenz-Kippwinkel. Das hat den Vorteil, dass eine Blendung eines Gegenübers vermieden wird, indem die Projektionseinheit für Winkelbereiche ausgeschaltet wird, die die Gefahr beinhalten, eine solche Blendung zu verursachen. Es kann somit dynamisch an die Lage der Brilleneinheit angepasst der Winkelbereich begrenzt werden, in welchen die Projektionseinheit das Projektionslicht abstrahlt. Überdies kann so eine Lageveränderung der Brilleneinheit in der computergenerierten Bildinformation kompensiert werden, sodass ein ortsstabiles virtuelles Bild dargestellt werden kann.

Ein weiterer Aspekt betrifft ein ER-Brillen-Anzeigesystem mit einer ER-Brillen-Anzeigevorrichtung nach einer der beschriebenen Ausführungsformen und mit einer in der Umgebung der ER-Brillen-Anzeigevorrichtung angeordneten Reflexionsfläche, insbesondere horizontalen angeordneten Reflexionsfläche. Die Reflexionsfläche ist bevorzugt eine Retroreflexionsfläche, wobei die Reflexionsfläche besonders bevorzugt an einer Decke eines Innenraums, im Allgemeinen parallel zu der Decke, angeordnet ist. Der Innenraum kann der Innenraum eines Gebäudes oder eines Flugzeugs oder eines Fahrzeugs oder eines Schiffes sein. Damit ist die Reflexionsfläche nach der allgemeinen Lebenserfahrung bei bestimmungsgemäßem Gebrauch der ER-Brillen-Anzeigevorrichtung außerhalb des Sichtbereiches des Nutzers angeordnet, was die beschriebenen Vorteile mit sich bringt.

Ein anderer Aspekt betrifft ein Verfahren zum Anzeigen eines virtuellen Bildes in einem Sichtfeld eines Nutzers. Verfahrensschritte sind dabei: ein Projizieren eines Projektionslichtes als computergenerierte Bildinformation von dem Nutzer fort in einen Umgebungsbereich außerhalb des Sichtfeldes des Nutzers, durch eine Projektionseinheit einer ER-Brillen-Anzeigevorrichtung; ein Reflektieren des Projektionslichtes, in dem Umgebungsbereich außerhalb des Sichtfeldes des Nutzers, durch eine Reflexionsfläche, zumindest zu einem Anteil zurück zum Nutzer hin; und ein Umlenken zumindest eines Teils des zurück zum Nutzer hin reflektierten Anteils des reflektierten Projektionslichtes in ein Auge des Nutzers, sodass im Auge des Nutzers entsprechend der computergenerierten Bildinformation das virtuelle Bild angezeigt wird.

Vorteile und vorteilhafte Ausführungsformen des Verfahrens entsprechen hier Vorteilen und vorteilhaften Ausführungsformen der ER-Brillen-Anzeigevorrichtung bzw. des ER-Brillen-Anzeigesystems.

Die vorstehend in der Beschreibung, auch im einleitenden Teil, genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der in den unabhängigen Ansprüchen definierten

Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch

Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen.

Anhand der in den nachfolgenden Figuren gezeigten schematischen Zeichnungen soll der erfindungsgemäße Gegenstand näher erläutert werden, ohne diesen auf die hier gezeigten spezifischen Ausführungsformen einschränken zu wollen. Dabei zeigt:
Fig. 1 den Aufbau einer beispielhaften ER-Brillen-Anzeigevorrichtung;
Fig. 2 eine Variante der ER-Brillen-Anzeigevorrichtung aus Fig. 1 in unterschiedlichen Situationen;
Fig. 3 unterschiedliche beispielhafte Konstellationen für die verwendete Projektionseinheit;
Fig. 4 eine beispielhaft um eine Strahlfalle erweiterte Ausführungsform;
Fig. 5 den Einsatz einer nicht perfekten Retroreflektorfläche in einer beispielhaften Situation;
Fig. 6 den beispielhaften Einsatz mehrerer Projektionselemente;
Fig. 7 eine beispielhafte Situation für eine mögliche Blendung;
Fig. 8 eine beispielhafte Situation für ein seitliches Übersprechen;
Fig. 9 eine beispielhafte spektrale Filtercharakteristik für ein Wellenlängen-Multiplex-Verfahren; und
Fig. 10 eine weitere beispielhafte Variante der ER-Brillen-Anzeigevorrichtung mit einer Vielzahl an elektronisch gesteuerten Verschlusselementen.

In den Figuren werden gleiche oder funktionsgleiche Elemente mit den gleichen Bezugszeichen versehen.

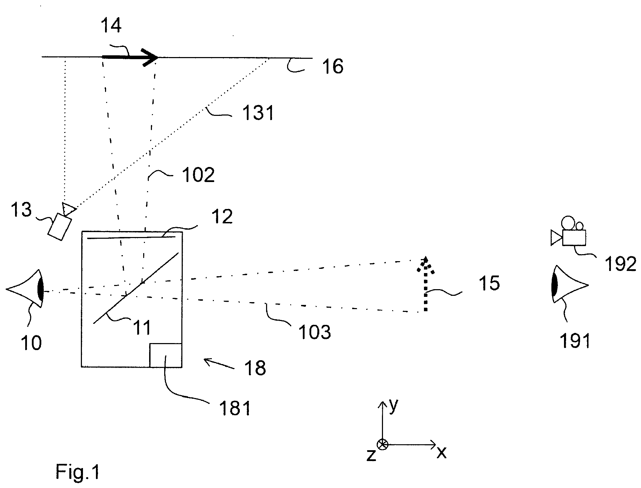

Fig. 1 zeigt den Aufbau einer beispielhaften ER-Brillen-Anzeigevorrichtung. Dem Auge 10 ist hier ein Strahlteilerelement als Umlenkeinheit 11 vorgeschaltet. Über diesen kann eine Reflexionsfläche 16, welche hier an der Decke angeordnet ist, betrachtet werden. Eine Projektionseinheit 13 der ER-Brillen-Anzeigevorrichtung 18 projiziert mit einem Projektionslicht 131 eine computergenerierte Bildinformation 14 auf diese Reflexionsfläche 16. Aufgrund der Umlenkeinheit 11 wird dieses reale Bild 14 außerhalb des Sichtfelds des Nutzers als ein virtuelles Bild 15 in dem Sichtfeld des Nutzers wahrgenommen. Dabei strahlt die Projektionseinheit 13 das Projektionslicht 131 nur in einem gewissen Winkel ab, zum Beispiel 45°. Aber auch kleinere Winkel wie 5°, 10°, 20° oder 30° sind möglich oder auch größere Winkel wie 50°, 55°, oder 60°. Jedoch darf dieser Winkel nicht so groß werden, dass Projektionslicht von der Projektionseinheit 13 direkt ins Auge 191 eines realen Gegenübers fällt, insbesondere nicht in Situationen, in welchen der Nutzer sich bewegt, beispielsweise vorbeugt. In diesem Fall würde der Gegenüber geblendet werden. Gleiches gilt für den Fall, wenn der physische Gegenüber durch eine Kamera 192 ersetzt wird.

Die AR-Brille 18 verfügt im gezeigten Beispiel zudem über eine Lagesensoreinheit 181. Diese wird hier genutzt die computergenerierte Bildinformation 14 so zu berechnen, dass diese als raumfestes virtuelles Bild 15 wahrgenommen wird. Zudem verfügt die ER-Brillen-Anzeigevorrichtung 18 in der vorliegenden Ausführungsform über eine Multiplex-Filtereinheit 12, die einen dem Strahlengang 102 entsprechenden zurück zum Nutzer hin reflektierten Anteil des Projektionslichts 131 so filtern kann, dass nur ein entsprechend einem Multiplex-Verfahren ausgewähltes Projektionssicht 131 der Projektionseinheit 13 in das Auge 10 treffen kann. Die technische Ausprägung der Multiplex-Filtereinheit 12 ergibt sich gemäß dem gewählten Multiplex-Verfahren. Gängige Multiplex-Verfahren sind Polarisations-Multiplex-Verfahren, zeitliche Multiplex-Verfahren und Wellenlängen-Multiplex-Verfahren.

Es sei darauf hingewiesen, dass Lichtstrahlen in die beziehungsweise aus der realen Welt, beispielsweise die sich im Strahlengang 103 des virtuellen Bildes 15 ausbreitenden Lichtstrahlen in die beziehungsweise aus der realen Welt, diese Multiplex-Filtereinheit 12 nicht passieren müssen. Dies ist vorteilhaft, da ein Gegenüber 191 oder eine Kamera 192 die Augen mit hoher Transparenz betrachten können und auch umgekehrt die reale Welt, also reale Objekte im Sichtfeld des Nutzers, durch den Nutzer ohne große Helligkeitseinbußen betrachtet werden können. Diese Transparenz ist vornehmlich durch die Transparenz der Umlenkeinheit 11, hier des Strahlteilers, definiert. Typische Transparenzen sind 80%. Es sind aber auch Transparenzen wie 95%, 90% oder 70%, 60%, 50%, 30%,20%, 10%, 5% und 1% denkbar, je nachdem wie stark das Projektionslicht des der Projektionseinheit 13 im Verhältnis zum Umgebungslicht ist.

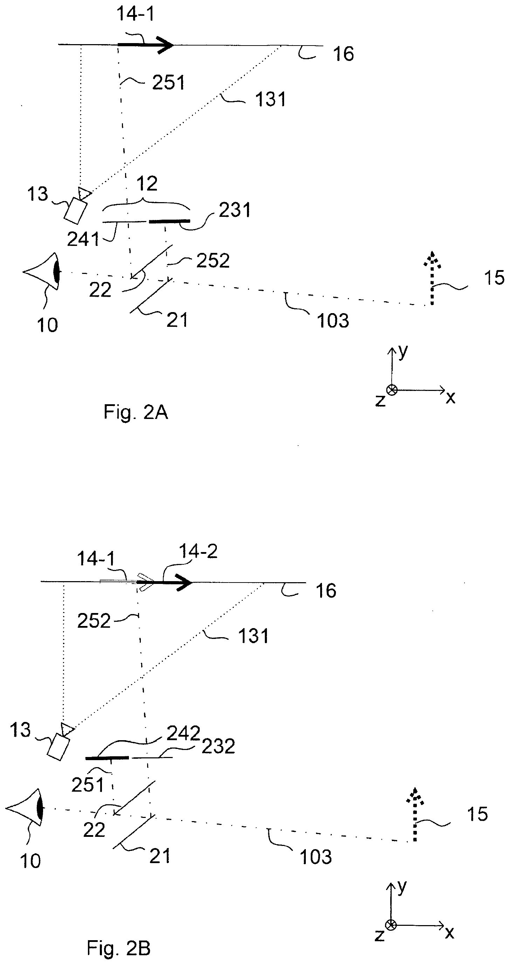

In Fig. 2 wird eine beispielhafte Variante der AR-Brille aus Fig. 1 gezeigt, bei der im Gegensatz zur Umsetzung nach Fig. 1 mehrere, hier zwei, vertikal, in y-Richtung gestapelte Strahlteilerelemente 21 und 22 in der Umlenkeinheit 11 verwendet werden. Die Verwendung von zwei Strahlteilerelementen 21, 22 ist in der Patentanmeldung DE 10 2020 206 392 genauer beschrieben, welche hiermit durch Referenz einbezogen wird. Entsprechend der gezeigten beispielhaften Variante ist ein Multiplex-Verfahren notwendig, dass ermöglicht Bilder in einem Überlappungsbereich von Strahlteiler 22 und Strahlteiler 21 separat anzuzeigen. Dieser Überlappungsbereich umfasst Sichtstrahlen im Strahlengang 103, die beide Strahlteiler passieren. Dazu wird hier eine Multiplex-Filtereinheit 12 mit zwei optischen Filter-Elementen 231 und 241 verwendet. Die Haupterstreckungsebene der optischen Filter-Elemente 231, 241 verläuft hier horizontal, also in der x-z-Ebene. Wird wie in Fig. 2A gezeigt durch die Projektionseinheit 13 bei geöffnetem, also transparentem Filter-Element 241 eine Bildinformation 14-1 an auf die Reflexionsfläche 16 geworfen dann ergibt sich entsprechend dem geöffneten Strahlengang 251 und dem geschlossenen Strahlengang 252 ein virtuelles Bild 15. In Fig. 2B ist die zweite Situation dargestellt, bei der das optische Filter-Element 242 auf opak geschaltet und Filter-Element 232 transparent geschaltet wird. Nun muss die Projektionseinheit 13 die ursprüngliche Bildinformation 14-1 entsprechend verschieben und Bildinformation 14-2 anzeigen. Der Betrachter 10 sieht weiterhin dem geschlossenen Strahlengang 251 und dem geöffneten Strahlengang 252 ein virtuelles Bild 15 an der gleichen Position. Die Verwendung von einem Array von gestapelten Strahlteilerelementen 22, 21 in der Umlenkeinheit 11 hat den Vorteil, dass der Platzbedarf für die Umlenkeinheit 11 effektiv verringert wird. Somit kann eine kleinere und leichtere AR-Brille aufgebaut werden.

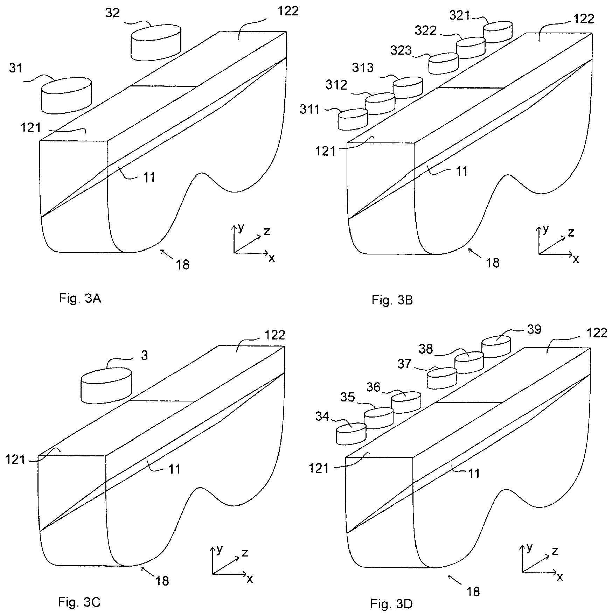

In Fig. 3 werden unterschiedliche beispielhafte Konstellationen für die verwendete Projektionseinheit dargestellt. In Fig. 3A wird eine technische Umsetzung einer Projektionseinheit 13 mit zwei Projektionselementen 31 und 32 dargestellt, wobei die Projektionselemente 31 und 32 bei geradeaus-Sicht vertikal über dem Auge positioniert sind. Die Projektionselemente 31 und 32 bilden hier eine jeweilige Gruppe von Projektionselementen, die in diesem Beispiel je nur ein einziges Projektionselement 31, 32 aufweisen. Das optische Filterelement 121 der Multiplex-Filtereinheit 12 sorgt dafür, dass nur eine Projektionslichtkomponente des rechten Projektionselements 31 ins rechte Auge trifft. Das optische Filterelement 121 hat für eine Projektionslichtkomponente, die vom Projektionselement 31 ausgesendet wird eine hohe Transparenz und ist opak für eine Projektionslichtkomponente, die vom Projektionselement 32 ausgesendet wird. Dabei sollte transparent zu opak einen Kontrast von mindestens 100:1 aufweisen, besser wären 300:1 aber auch 50:1 sind denkbar. Entsprechendes gilt für das Filterelement 122 der Multiplex-Filtereinheit 12.

Die technische Umsetzung der optischen Filterelemente 121 und 122 ergibt sich aus dem gewählten Multiplex-Verfahren. In den gezeigten Beispielen weisen die optischen Filterelemente 121 und 122 eine horizontale Haupterstreckungsebene auf, erstrecken sich also hauptsächlich in der x-z-Ebene. Im Falle eines Polarisations-Multiplex-Verfahrens handelt es sich um Polarisations-Filterelemente. Dabei können lineare Polarisatoren oder auch zirkulare Polarisatoren eingesetzt werden. Entsprechend würde in diesem Fall die Projektionselemente 31 und 32 auch ein polarisierendes optisches Element beinhalten. Im Falle eines zeitlichen Multiplex-Verfahrens können beispielsweise optische Shutter basierend auf Liquid-Crystal-Technologie eingesetzt werden. In diesem Fall wären die Projektionselemente 31 und 32 zeitlich mit den Shutter synchronisiert. Im Falle eines Wellenlängen-Multiplex-Verfahrens werden die Filterelemente 121 und 122 als wellenlängenabhängige Filter gewählt, zum Beispiel als Interferenzfilter umgesetzt. Die Projektionselemente 31 und 32 haben in diesem Fall ein spektral angepasstes Emissionsspektrum.

In Fig. 3B ist eine beispielhafte Anordnung gezeigt, bei der eine Farb-Darstellung mittels drei Projektionselementen 311, 312, 313, 321, 322, 323 je Gruppe und damit je Seite umgesetzt wird. Dazu projiziert in diesem Beispiel Projektionselement 311 nur ein rotes Bild, Projektionselement 312 ein grünes Bild und Projektionselement 313 ein blaues Licht. Entsprechend auf der zweiten Seite hier Projektionselement 321 nur rot, Projektionselement 322 grün und Projektionselement 323 blau. Die Projektionselemente weisen entsprechend geeignete Lichtquellen auf, beispielsweise Laserlichtquellen. Die Projektionselemente 311-313 und 321-323 projizieren dabei im Wesentlichen überlappende Bilder, sodass ein Gesamtbild in Farbe resultiert, dass in seinen Abmessungen im Wesentlichen der Größer des Bildes entspricht, dass nur von einem Projektionselement projiziert wird.

In Fig. 3C wird eine beispielhafte Umsetzung mit nur einem einzigen Projektionselement 3 gezeigt. Der Vorteil dieser Umsetzung liegt in der Einfachheit und geringen Anzahl an notwendigen Komponenten.

In Fig. 3D ist eine beispielhafte Variante gezeigt, bei dem mehrere Projektionselemente pro Auge eingesetzt werden, welche hier jeweils als vollfarbiges RGB-Projektionselement umgesetzt sind. Die gezeigte Anzahl von drei Projektionselementen 34-39 pro Auge ist dabei beispielhaft zu verstehen. Es können auch zwei Projektionselemente pro Auge oder mehr Projektionselemente pro Auge eingesetzt werden, z.B. 10 Stück. Der Vorteil dieses Ansatzes ist die höhere erzielbare Auflösung ohne das dazu ein jeweils sehr hoch auflösendes einzelnes Projektionselement 34-39 realisiert werden muss. Dadurch sind auch die Anforderungen an die Optiken der Projektionselemente 34-39 geringer. Da das Auge sich rechts links bewegt ist ein weiterer Vorteil, dass das Licht für den rechten Sichtbereich von rechts liegenden Projektionselementen 34, 37 ausgesendet wird. Folglich ist die Distanz von Projektionselement 34, 37, 36, 39 zu Pupille des Auges 10 geringer wodurch eine höhere Lichteffizienz erreicht werden kann. Die Projektoren 34-39 projizieren dabei bevorzugterweise reale jeweils nicht vollständig überlappende Bilder, sodass ein größeres Bild entsteht.

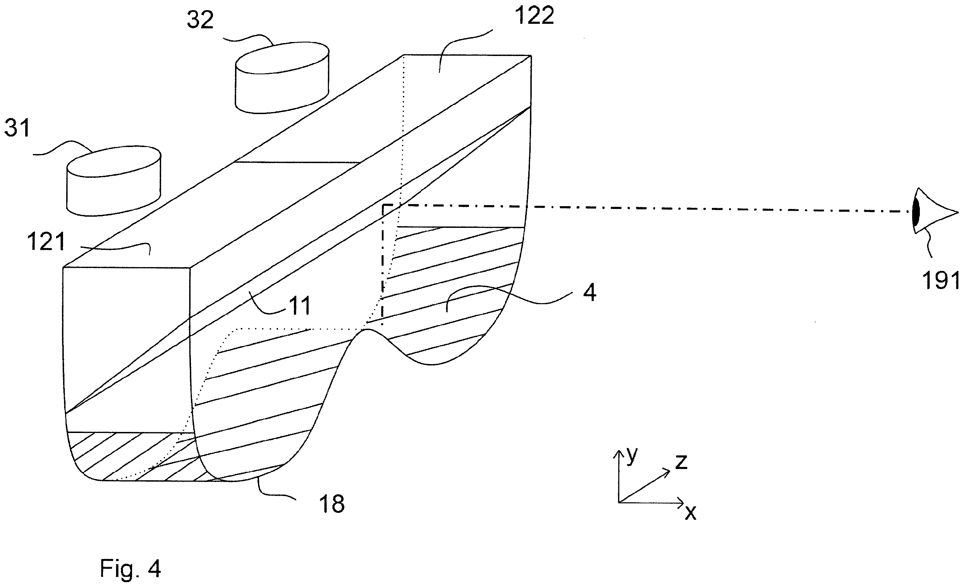

In Fig. 4 wird die AR-Brille 18 um ein Strahlfallenelement 4 erweitert. Diese hat die Funktion, dass Licht von dort nicht durch die Umlenkeinheit 11 zum Beobachter 191 reflektiert wird. So können zum Beispiels Reflektionen aufgrund des Umgebungslichtes an der hier mit dem Strahlfallenelement versehenen Fläche vermieden werden. Zur technischen Umsetzung des Strahlfallenelements 4 sind viele Verfahren nach dem Stand der Technik bekannt. Zum Beispiel sind schwarze optische Schichten geeignet, entsprechendes Licht zu absorbieren. Auch diffuse schwarze Oberflächen wie schwarz eloxiertes Aluminium können zum Einsatz kommen.

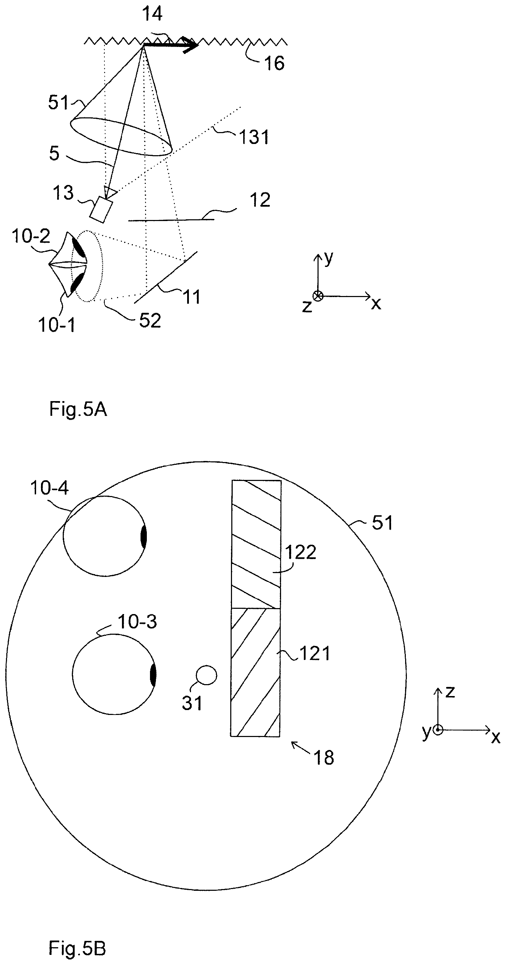

Fig. 5A visualisiert den Einsatz eines nicht perfekten Retroreflektors als Reflexionsfläche 16. Ein perfekter Retroreflektor würde das Projektionslicht 131 der Projektionseinheit 13 zu 100% zu diesem zurück reflektieren, beispielsweise genau entlang dem Strahlengang 5. In diesem Fall eines perfekten Retroreflektors würde das Auge 10, sei es das nach unten blickende Auge 10-1 oder das nach oben blickende Auge 10-2, des AR-Brillenträgers im gezeigten Beispiel überhaupt kein Licht sehen. Vorteilhafterweise wird also nicht alles Projektionslicht 131 der Projektionseinheit 13 zur Projektionseinheit 13 zurückgeworfen, sondern vielmehr wird das Projektionslicht 131 in einer einem gewissen Kegel 51 entsprechenden Winkelverteilung zurückgeworfen. Dieser Kegel 51 ist so groß, dass auch der relevante Kegel 52, in welchem der reflektierte Anteil des Projektionslichtes 131 enthalten ist, welcher zurück zu den in unterschiedliche Richtungen blickende Auge 10-1, 10-2 gelangt. Somit kann Projektionslichtes 131 der Projektionseinheit 13 das Auge 10-1 bzw. 10-2 zumindest teilweise erreichen. Ein nicht perfekter Lichtkegel 51 ist vorteilhaft, da die Pupille des Auges 10-1, 10-2 sich aufgrund der Orientierung des Auges 10 an unterschiedlichen Orten befindet. Für ein großes AR-Sichtfeld von beispielsweise 45° vertikal und 100° horizontal muss ein entsprechend großer relevanter Kegel 52 realisiert werden, damit eine projiziertes Bildinformation 14 in jeder Position des Auges 10-1, 10-2 sichtbar ist. Im Falle eines perfekten Retroreflektors als Reflexionsfläche 16 wäre dies nur möglich, wenn Projektionseinheit 13 über einen Strahlteiler optisch in den Kegel 52 eingekoppelt werden würde und die Austrittpupille der Projektionseinheit 13 entsprechend groß genug wäre, um den Kegel 52 vollständig abzudecken. Dies ist jedoch Nachteilhaft, da ein zusätzlicher Strahlteiler notwendig wäre und die Projektionseinheit 13 zur technischen Realisierung der großen Austrittpupille entsprechend große Linsen benötigen würde. Ein nicht perfekter Retroreflektor ist somit vorteilhaft.

Fig. 5B zeigt die Situation von Fig. 5A aus einer um 90° gedrehten Perspektive. Bei einem nicht perfekten Retroreflektor als Reflexionsfläche 16 wird der rückreflektierte Anteil des Projektionslichtes 131 der Projektionseinheit 13 so zurück reflektiert, dass rechtes Auge 10-3 und linkes Auge 10-4 dies über die Umlenkeinheit 11 sehen können. Somit ist eine weitere technische Maßnahme notwendig die dafür sorgt, dass die Projektionslichtkomponente, die von einem rechten Projektionselement 31 ausgestrahlt wird, nur vom rechten Auge 10-3 gesehen werden kann und das linke Auge 10-4 diese Projektionslichtkomponente nicht sehen kann. Nur so ist es möglich stereographische Bilder für jedes Auge getrennt anzuzeigen und einen 3D-Eindruck für das virtuelle Bild zu erzeugen. Zur technischen Umsetzung sind die optischen Filterelemente 121 und 122 der Multiplex-Filtereinheit 12 notwendig. Deren technische Ausprägung ist wie oben dargelegt abhängig vom gewählten Multiplexing Verfahren.

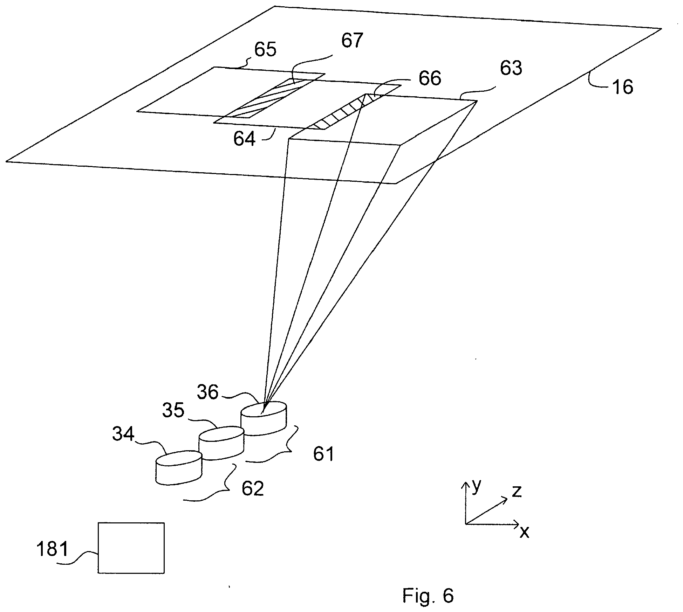

Fig. 6 zeigt den beispielhaften Fall, dass mehrere Projektionselemente 34, 35 und 36 zum Einsatz kommen. Diese sind räumlich in einem vorgegebenen Abstand 61 und 62 zueinander angeordnet. Zudem sind diese so ausgerichtet, dass die projizierten Bildinformationen 63, 64 und 65 separat auf der Reflexionsfläche 16 positioniert sind. Allerdings existieren vorliegend für die erwarteten Arbeitsabstände zwischen den Projektionselementen 34-36 und der Reflexionsfläche 16 Überlappungsregionen 66 und 67. Es ist somit ein Darstellungsverfahren notwendig, dass doppelte Projektionen oder lückenhafte Projektionen in diesen Überlappungsregionen 66, 67 verhindert. Dazu ist die relative Positionierung und Orientierung der Projektionselemente 34, 35 und 36 zur Reflexionsfläche 16 relevant, die vorliegend durch eine Lagesensoreinheit 181 mit ausreichend hoher Wiederholrate gemessen wird. Basierend auf dem Wissen einer relativen Positionierung kann dann für jedes benachbarte Bild berechnet werden, welche Pixel vom einen Projektorelement und welche Pixel vom benachbarten Projektorelement genutzt werden müssen, damit eine lückenfreies Gesamtprojektionsbildinformation entsteht ohne Dopplungen in den Überlappungsbereichen 66 und 67.

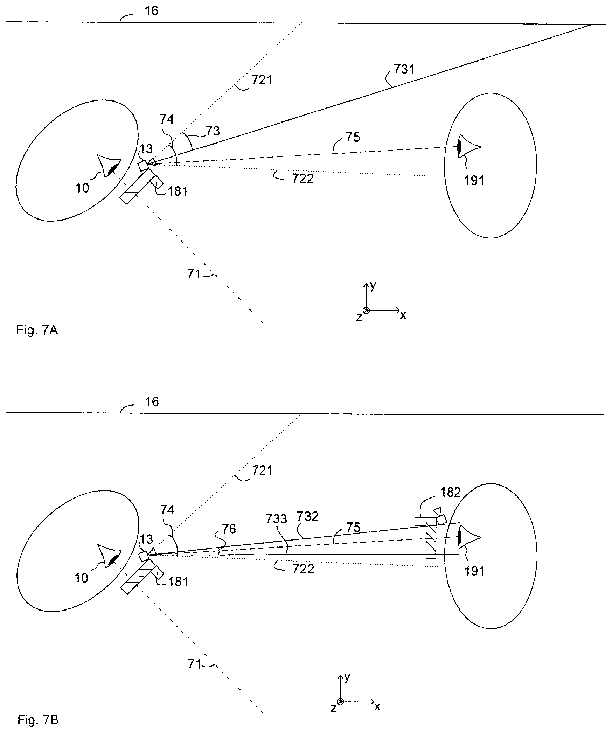

Figur 7A zeigt eine beispielhafte Situation, bei der ein AR-Brillen Träger mit Blickrichtung 71 nach unten einen Kommunikationspartner gegenüber hat. Die Projektionseinheit 13 strahlt dabei in einen Winkelbereich 74 aus, der nach unten durch den Strahlengang 722 und nach oben durch den Strahlengang 721 begrenzt ist. Damit ist entlang einem Sichtstrahl 75 vom Auge 191 des Gegenübers in die Projektionseinheit 13 ein direkter Blick des Gegenübers in das Projektionslicht möglich. Wird die Projektionseinheit 13 dabei nicht ausgeschaltet, so kommt es zu einer Blendung was für eine Kommunikation nachteilhaft ist.

Um diese zu vermeiden wird die Projektionseinheit 13 in diesem Beispiel für Winkelbereiche ausgeschaltet, die die Gefahr beinhalten, eine solche Blendung zu verursachen. In diesem Fall nutzt der Projektor nur Winkelbereich 73. Dieser entspricht dem Winkelbereich 74, bei welchem die durch den Strahlengang 722 festgelegte untere Grenze nunmehr durch den Strahlengang 731 vorgegeben ist. Dies ist möglich, da aufgrund der Lagesensoreinheit 181 die relative Ausrichtung der AR-Brille zum Reflexionsfläche 16 bekannt ist. Wird ein Mindestabstand zwischen den beiden Kommunikationspartnern eingehalten, dann kann auf diese Weise eine Blendung für den Fall einer Sicht 71 nach unten vermieden werden. Dazu kann beispielsweise der äußerste Strahlengang 731 des Projektionslichtes auf 45° zur Horizontalen, der x-z-Ebene, gewählt begrenzt werden. Aber auch andere Werte wie 20°, 30° 60°, 70° und 80° sind möglich.

In Fig. 7B ist die gleiche Situation wie in 7A gezeigt, wobei der Gegenüber selbst eine AR-Brille trägt. Somit ist die Augenposition des Gegenübers aufgrund der zugeordneten Lagesensoreinheit 182 bekannt, ebenso wie die Gesamt-Konstellation von Projektionseinheit 13 und Gegenüber aufgrund der Lagesensoreinheiten 181 und 182 bekannt ist. Diese Information kann ausgenutzt werden, um einen Winkelbereich 76 innerhalb des Winkelbereiches 74, welcher durch die Strahlengänge 732 und 733 begrenzt wird und ursächlich für die Blendung ist, gezielt schwarz zu schalten.

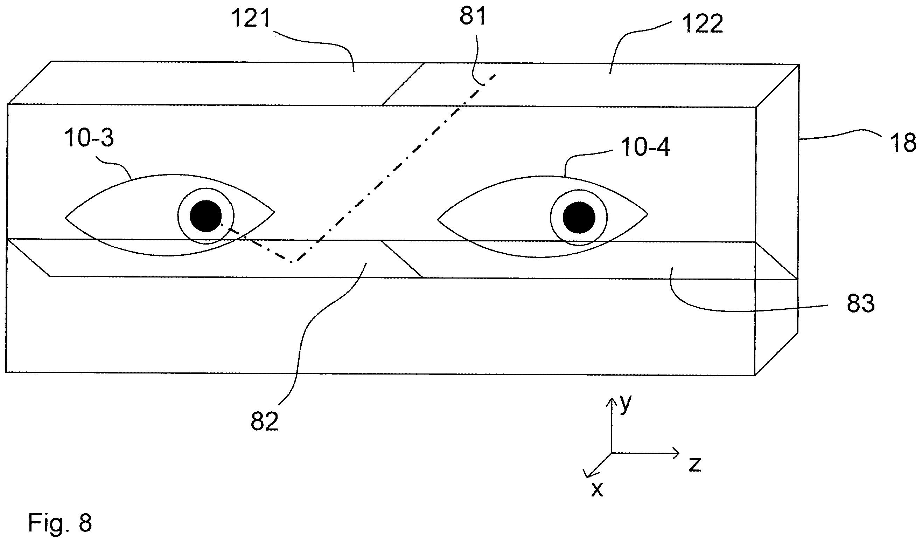

In Fig. 8 wird beispielhaft eine Situation für 3D-Stereo-Sehen mit besonders großem horizontalen Sichtfeld dargestellt. Um technisch ein 3D Stereo-Sehen umzusetzen ist ein Multiplex-Verfahren notwendig. Bei einer solchen Situation kann es zu einem seitlichen Übersprechen kommen. Dabei schaut in der gezeigten Situation das rechte Auge 10-3 nach links. Dadurch existieren Sichtstrahlen wie der Sichtstrahl 81, die durch das optische Filterelement 122, welches dem anderen Auge zugeordnet ist, transmittieren. Wird zum Beispiel ein zeitliches Multiplex-Verfahren verwendet, dann ist 122 ein optischer Verschluss, ein Shutter. Dieser ist geöffnet, wenn das Bild für das linke Auge 10-4 angezeigt wird. Somit ist für das rechte Auge 10-3 das Bild des linken Auges 10-4 sichtbar. Somit stellt Fig. 8 eine Situation dar, die kein 3D Stereovision in diesem Randbereich des horizontalen Sichtfeldes ermöglicht.

Daher ist in Fig. 8 eine beispielhafte Variante gezeigt, bei dem die Umlenkeinheit 11 zwei teildurchlässige Spiegelelemente 82 und 83 umfasst, welche horizontal, also in z-Richtung, nebeneinander angeordnet jeweils einem der Augen 10-3, 10-4 zugeordnet sind. Die teildurchlässigen Spiegelelemente 82 und 83 spielen hier jedoch gleichzeitig eine Rolle im Multiplex-Verfahren Die Spiegelelemente der Umlenkeinheit 11 sind also in diesem Beispiel zugleich Filterelemente der Multiplex-Filtereinheit 12. Im Falle eines zeitlichen Multiplex-Verfahrens handelt es sich um Spiegelelemente, die durch Anlegen einer Spannung transparent geschaltet werden können. Im Falle eines Polarisations-Multiplex-Verfahrens handelt es sich um Polarisations-Strahlteilerelemente, wobei 82 und 83 orthogonal zueinander polarisiert sind. Im Fall eines Wellenlängen-Multiplex-Verfahrens handelt es sich beispielsweise um Interferenzfilterelemente, die unterschiedliche Wellenlängen für das rechte und linke Auge 10-3, 10-4 reflektiert. Damit kann der nutzbare horizontale Sichtbereich für das 3D Stereosehen größer gewählt werden.

Das Übersprechen durch den Sichtstrahl 81 kann auch dadurch vermieden werden, indem Bildinhalte, die ein solches Übersprechen verursachen würden, nicht angezeigt werden. Dadurch reduziert sich allerdings effektiv der nutzbare horizontale Sichtbereich zur Anzeige eine stereographischen 3D-Bildes.

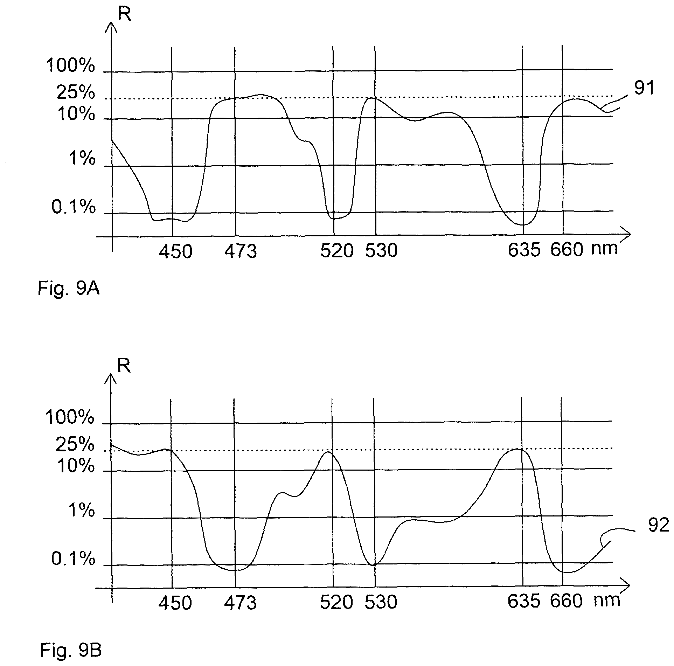

Figur 9 zeigt beispielhafte spektrale Filtercharakteristiken, wie sie für Strahlteilerelemente 82 und 83 im Falle eines Wellenlängen-Multiplex-Verfahrens vorteilhaft sind. Die Filtercharakteristik 91 in Fig. 9A zeigt dabei die Reflektanz des Strahlteilerelements 82 vor dem rechten Auge 10-3, die Filtercharakteristik 92 in Fig. 9B die Reflektanz des Strahlteilerelements 83 vor dem linken Auge 10-4. Für das Wellenlängen-Multiplex-Verfahren werden unterschiedliche Wellenlängen, hier 6 Laser-Wellenlängen, verwendet. Dabei werden 450nm, 520nm und 635nm für das linke Auge 10-4 verwendet und 473nm, 530nm und 660nm für das rechte Auge 10-3. Charakteristisch für die Strahlteilerelemente 82, 83 ist hier, dass sie eine hohe Transmission, bzw. geringe Reflektanz für die Wellenlängen besitzen, die nicht durch dieses Auge im virtuellen Bild gesehen werden sollen. Beispielsweise also eine Reflektanz von kleiner 0.1% für Wellenlängen die nicht im virtuellen Bild gesehen werden sollen und eine Reflektanz von ungefähr 25% für Wellenlängen die teilweise ins Auge gespiegelt werden, also im virtuellen Bild gesehen werden sollen. Dadurch ergibt sich ein Kontrastverhältnis von 255:1, was im Zusammenhang mit Stereo-Sehen ausreichend ist.

Da die maximale Reflektanz nur 25% beträgt, hat diese beispielhafte Variante der Erfindung den Vorteil einer sehr hohen Transmission. Dadurch wird das Problem abgemildert, dass die Strahlteilerelemente 82, 83 einen farbfilternden Effekt beim Betrachten der natürlichen Umgebung haben. Durch die hohe Transmission werden auch Lichtreflexe in Richtung des Kommunikationspartners verringert, der sich dann kurzzeitig geblendet fühlt.

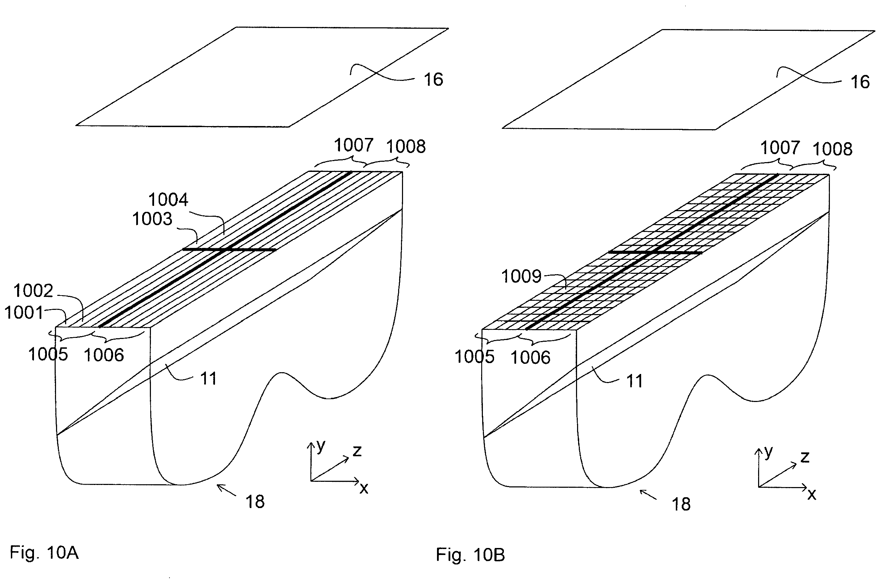

Fig. 10 eine weitere beispielhafte Variante der ER-Brillen-Anzeigevorrichtung mit einer Vielzahl an elektronisch gesteuerten Verschlusselementen als Filter-Elemente. Die Vielzahl der Verschlusselemente 1001, 1002, 1003, 1004 lassen sich dabei jeweils für das rechte Auge in zwei Gruppen 1005, 1006 und für das linke Auge in zwei Gruppen 1007, 1008 funktional zusammenfassen. Die Verschlusselemente einer jeweiligen Gruppe können somit synchron als ein einheitliches Verschlusselement geschaltet werden und ein Multiplex-Verfahren umsetzen wie es beispielsweise in Fig. 2 erklärt ist. Die verwendete Vielzahl der einzelnen Verschlusselemente 1001-1004 ermöglicht es jedoch zusätzlich durch dauerhaftes opak-Schalten ausgewählter Verschlusselemente zugeordnetet ausgewählte Sichtbereiche generell abzudunkeln. Damit kann verhindert werden, dass die Umgebung über die Umlenkeinheit 11 gesehen werden kann, wenn die Umlenkeinheit 11 so geneigt oder positioniert ist, dass ansonsten über die Umlenkeinheit 11 nicht ausschließlich die Projektionsfläche 16 gesehen werden könnte. Beispielsweise kann so verhindert werden, dass bei einem Neigen des Kopfes der Nutzer über die Umlenkeinheit 11 eine Lichtquelle in seiner Umgebung in Form einer virtuellen Lichtquelle überlagert mit der computergenerierten Bildinformation zu sehen bekommt. In diesem Fall können die Shutter 1001-1004 teilweise schwarz geschalten werden, womit die Lichtquelle nicht über den Strahlteiler 11 gesehen werden kann.

In Fig. 10B ist eine weitere beispielhafte Variante der ER-Brillen-Anzeigevorrichtung mit einer Vielzahl an elektronisch gesteuerten Verschlusselementen als Filter-Elemente gezeigt. Im Gegensatz zu den Verschlusselementen 1001-1004 von Fig. 10A, welche zeilenartig strukturiert sind, und somit hier in z-Richtung um ein Vielfaches länger als in x-Richtung breit, sind die Verschlusselemente 1009 in diesem Beispiel pixelartig strukturiert, erstrecken sich als hier in z-Richtung und x-Richtung etwa gleich weit. Dadurch können nicht nur die beschriebenen Probleme bei einer Kopfneigung nach vorne gelöst werden, sondern auch seitliche Sichtbereiche blockiert werden und damit auch die mit Fig. 8 visualisierten Probleme gelöst werden.

## Patentansprüche

1. Erweiterte-Realität-Brillen-Anzeigevorrichtung, ER-Brillen-Anzeigevorrichtung (18), zum Anzeigen eines virtuellen Bildes (15) in einem Sichtfeld eines Nutzers der ER-Brillen-Anzeigevorrichtung (18), mit
- einer Brilleneinheit, welche ausgebildet ist vom Nutzer bei bestimmungsgemäßem Gebrauch nach Art einer Brille getragen zu werden;
- einer an der Brilleneinheit angeordneten Projektionseinheit (13), welche ausgebildet ist, ein Projektionslicht (131) von dem Nutzer fort in eine Umgebung als computergenerierte Bildinformation (14) abzustrahlen;
**dadurch gekennzeichnet, dass**
- die Projektionseinheit (13) ausgebildet ist, das Projektionslicht (131) in einen Umgebungsbereich abzustrahlen, welcher sich zumindest im Wesentlichen außerhalb des Sichtfeldes des Nutzers befindet; und
- an der Brilleneinheit eine Umlenkeinheit (11) angeordnet ist, welche ausgebildet ist, einen von einer Reflexionsfläche (16) in dem im Wesentlichen außerhalb des Sichtfeldes des Nutzers angeordneten Umgebungsbereich zum Nutzer zurück reflektierten Anteil des Projektionslichtes in ein Auge (10) des Nutzers zu lenken.

2. ER-Brillen-Anzeigevorrichtung (18) nach dem vorhergehenden Anspruch,
**gekennzeichnet durch**
eine an der Brilleneinheit, insbesondere zumindest im Wesentlichen außerhalb des Sichtfeldes des Nutzers, angeordnete Multiplex-Filtereinheit (12), welche ausgebildet ist, den in der Umgebung zum Nutzer zurück reflektierten Anteil des Projektionslichtes (131) zumindest teilweise entsprechend einem Multiplex-Verfahren zu filtern, insbesondere bevor der zurück reflektierte Anteil des Projektionslichtes durch die Umlenkeinheit (11) umgelenkt wird oder mit dem Umlenken des zurück reflektierten Anteils des Projektionslichtes.

3. ER-Brillen-Anzeigevorrichtung (18) nach dem vorhergehenden Anspruch,
**dadurch gekennzeichnet, dass**
die Multiplex-Filtereinheit (12) zumindest zwei für ein Polarisations-Multiplex-Verfahren ausgebildete Polarisations-Filterelemente und/oder zumindest zwei für ein Wellenlängen-Multiplex-Verfahren ausgebildete Wellenlängen-Filterelemente und/oder zumindest zwei für ein zeitliches Multiplex-Verfahren ausgebildete Verschluss-Filterelemente aufweist.

4. ER-Brillen-Anzeigevorrichtung (18) nach dem vorhergehenden Anspruch,
**dadurch gekennzeichnet, dass**
die Multiplex-Filtereinheit (12) eine Vielzahl von für das zeitliche Multiplex-Verfahren ausgebildeten Verschluss-Filterelementen (1001, 1002, 1003, 1004, 1009) aufweist, welche je einer von zwei jeweils einem Auge zugeordneten Gruppen (1005, 1006, 1007, 1008) von Verschluss-Filterelementen zugeordnet sind, und welche jeweils als Verschluss-Pixel-Filterelement (1009) in einer Verschluss-Filterelemente-Matrixanordnung oder als Verschluss-Zeilen-Filterelement (1001, 1002, 1003, 1004) in einer Verschluss-Filterelemente-Zeilenanordnung angeordnet sind.

5. ER-Brillen-Anzeigevorrichtung (18) nach einem der vorhergehenden Ansprüche,
**dadurch gekennzeichnet, dass**
die Umlenkeinheit (11) zumindest ein Strahlteilerelement und ein Spiegelelement aufweist, wobei das Spiegelelement und das zumindest eine Strahlteilerelement jeweils ausgebildet sind, den zum Nutzer zurück reflektierten Anteil des Projektionslichtes zu einem entsprechenden Teil in das Auge des Nutzers zu lenken.

6. ER-Brillen-Anzeigevorrichtung (18) nach einem der vorhergehenden Ansprüche,
**dadurch gekennzeichnet, dass**
die Projektionseinheit (13) zwei Projektionselement-Gruppen aufweist, welche jeweils einem Auge des Nutzers zugeordnet sind, wobei jede Projektionselement-Gruppe zumindest ein Projektionselement aufweist, durch welches eine jeweilige Projektionslichtkomponente in die Umgebung abstrahlbar ist, wobei insbesondere die Projektionselemente in einer Linie angeordnet sind.

7. ER-Brillen-Anzeigevorrichtung (18) nach dem vorhergehenden Anspruch,
**dadurch gekennzeichnet, dass**
die Projektionselement-Gruppen jeweils drei verschiedenartige Projektionselemente aufweisen, welche ausgebildet sind eine jeweils spezifische Projektionslichtkomponente abzustrahlen, insbesondere Projektionslichtkomponenten unterschiedlicher Farben, bevorzugt mit einer roten und einer grünen und einer blauen Farbe.

8. ER-Brillen-Anzeigevorrichtung (18) nach einem der vorhergehenden Ansprüche,
**gekennzeichnet durch**
eine an der Brilleneinheit angeordnete Lagesensoreinheit (181), welche ausgebildet ist eine Lage und/oder Lageveränderung der Brilleneinheit zu erfassen, wobei die Projektionseinheit (13) ausgebildet ist, das Projektionslicht (131) in Abhängigkeit der von der Lagesensoreinheit (181) erfassten Lage und/oder Lageveränderung abzustrahlen.

9. ER-Brillen-Anzeigevorrichtung (18) nach dem vorhergehenden Anspruch,
**dadurch gekennzeichnet, dass**
die Lagesensoreinheit (181) ausgebildet ist, einen Kippwinkel der Brilleneinheit gegenüber einer Vertikalachse des Nutzers und/oder eine Rotation um die Vertikalachse mit einem entsprechenden Rotationswinkel zu erfassen, wobei insbesondere die Projektionseinheit (13) ausgebildet ist, Projektionslicht (131) nur in einem Kippwinkel abzustrahlen, welcher geringer ist als ein vorgegebener Grenz-Kippwinkel.

10. ER-Brillen-Anzeigesystem mit einer ER-Brillen-Anzeigevorrichtung (18) nach einem der vorhergehenden Ansprüche und einer in der Umgebung der ER-Brillen-Anzeigevorrichtung (18) angeordneten Reflexionsfläche (16), insbesondere horizontalen angeordneten Reflexionsfläche (16), bevorzugt eine Retroreflexionsfläche, wobei die Reflexionsfläche (16) besonders bevorzugt an einer Decke eines Innenraums angeordnet ist.

11. Verfahren zum Anzeigen eines virtuellen Bildes in einem Sichtfeld eines Nutzers, mit den Verfahrensschritten:
- Projizieren eines Projektionslichtes (131) als computergenerierte Bildinformation (14) von dem Nutzer fort in einen Umgebungsbereich außerhalb des Sichtfeldes des Nutzers;
- Reflektieren des Projektionslichtes (131), in dem Umgebungsbereich außerhalb des Sichtfeldes des Nutzers;
- Umlenken eines zurück zum Nutzer hin reflektierten Anteils des reflektierten Projektionslichtes in ein Auge (10) des Nutzers, sodass im Auge (10) des Nutzers entsprechend der computergenerierten Bildinformation das virtuelle Bild (15) angezeigt wird.

## Claims

1. Augmented reality eyeglass display device, AR eyeglass display device (18), for displaying a virtual image (15) in a field of view of a user of the AR eyeglass display device (18), comprising
- a spectacle unit which is configured to be worn by the user in the manner of spectacles when used as intended;
- a projection unit (13) arranged on the spectacle unit, which is configured to emit a projection light (131) away from the user into an environment as computer-generated image information (14);
**characterized in that**
- the projection unit (13) is configured to emit the projection light (131) into a region of the environment which is located at least substantially outside the user's field of vision; and
- a deflection unit (11) is arranged on the spectacle unit, which is configured to deflect a portion of the projection light reflected from a reflection surface (16) in the region of the environment arranged substantially outside the user's field of vision back to the user into an eye (10) of the user.

2. AR eyeglass display device (18) according to the preceding claim,
**characterized by**
a multiplex filter unit (12) arranged on the spectacle unit, in particular at least substantially outside the user's field of vision, which is configured to filter the portion of the projection light (131) reflected back to the user in the surroundings at least partially in accordance with a multiplex process, in particular before the portion of the projection light reflected back is deflected by the deflection unit (11) or with the deflecting of the portion of the projection light reflected back.

3. AR eyeglass display device (18) according to the preceding claim,
**characterized in that**
the multiplex filter unit (12) has at least two polarization filter elements configured for a polarization multiplex method and/or at least two wavelength filter elements designed for a wavelength multiplex method and/or at least two shutter-filter elements designed for a temporal multiplex method.

4. AR eyeglass display device (18) according to the preceding claim,
**characterized in that**
the multiplex filter unit (12) has a plurality of shutter-filter elements (1001, 1002, 1003, 1004, 1009) designed for the temporal multiplex method, which filter elements are each assigned to one of two groups (1005, 1006, 1007, 1008) of shutter-filter elements, which are each assigned to one eye, and which are each arranged as a shutter-pixel-filter element (1009) in a shutter-filter-element matrix-arrangement or as a shutter-line-filter element (1001, 1002, 1003, 1004) in a shutter-filter-element line-arrangement.

5. AR eyeglass display device (18) according to one of the preceding claims,
**characterized in that**
the deflection unit (11) has at least one beam splitter element and one mirror element, the mirror element and the at least one beam splitter element each being configured to deflect the portion of the projection light reflected back to the user into the user's eye to a corresponding portion.

6. AR eyeglass display device (18) according to one of the preceding claims,
**characterized in that**
the projection unit (13) has two projection element groups which are each assigned to one eye of the user, each projection element group having at least one projection element through which a respective projection light component can be emitted into the environment, in particular the projection elements being arranged in a line.

7. AR eyeglass display device (18) according to the preceding claim,
**characterized in that**
the projection element groups each have three different projection elements which are configured to emit a specific projection light component in each case, in particular projection light components of different colors, preferably with a red and a green and a blue color.

8. AR eyeglass display device (18) according to one of the preceding claims,
**characterized by**
a position sensor unit (181) which is arranged on the spectacle unit and is configured to detect a position and/or change in position of the spectacle unit, wherein the projection unit (13) is configured to emit the projection light (131) as a function of the position and/or change in position detected by the position sensor unit (181).

9. AR eyeglass display device (18) according to the preceding claim,
**characterized in that**
the position sensor unit (181) is configured to detect a tilt angle of the spectacle unit relative to a vertical axis of the user and/or a rotation about the vertical axis with a corresponding rotation angle, wherein in particular the projection unit (13) is configured to emit projection light (131) only at a tilt angle which is less than a predetermined limit tilt angle.

10. AR eyeglass display system with an AR eyeglass display device (18) according to one of the preceding claims and a reflective surface (16) arranged in the environment of the AR eyeglass display device (18), in particular a horizontally arranged reflective surface (16), preferably a retroreflective surface, the reflective surface (16) being arranged particularly preferably on a ceiling of an interior space.

11. method for displaying a virtual image in a user's field of vision, comprising the method steps of
- Projecting a projection light (131) as computer-generated image information (14) away from the user into a region of the environment outside the user's field of vision;
- reflecting the projection light (131) in the region of the environment outside the user's field of view;
- redirecting a portion of the reflected projection light reflected back towards the user into an eye (10) of the user so that the virtual image (15) is displayed in the eye (10) of the user in accordance with the computer-generated image information.

## Revendications

1. Dispositif d' affichage de lunettes à réalité augmentée, dispositif d' affichage de lunettes AR (18), pour afficher une image virtuelle (15) dans un champ de vision d'un utilisateur du dispositif d'affichage de lunettes AR (18), avec
- une unité de lunettes, qui est conçue pour être portée par l'utilisateur pendant une utilisation prévue en tant que paire de lunettes ;
- une unité de projection (13) qui est disposée sur l'unité de lunettes et qui est conçue pour émettre une lumière de projection (131) de la part de l'utilisateur dans l'environnement en tant qu'informations d'image générées par ordinateur (14) ;
**caractérisé en ce que**
- l'unité de projection (13) est conçue pour émettre la lumière de projection (131) dans une zone de l'environnement qui est située au moins essentiellement hors du champ de vision de l'utilisateur ; et
- une unité de déviation (11) étant disposée sur l'unité de lunettes, ladite unité de déviation étant conçue pour dévier une partie de la lumière de projection, réfléchie vers l'utilisateur par une surface de réflexion (16) dans la zone de l'environnement située essentiellement hors du champ de vision de l'utilisateur, dans un oeil (10) de l'utilisateur.

2. Dispositif d'affichage de lunettes AR (18) selon la revendication précédente, **caractérisé par**
une unité de filtrage multiplex (12) disposée sur l'unité de lunettes, en particulier au moins essentiellement en dehors du champ de vision de l'utilisateur, qui est conçue pour filtrer au moins partiellement la partie de la lumière de projection (131) réfléchie dans l'environnement vers l'utilisateur selon un procédé multiplex, en particulier avant que la partie réfléchie de la lumière de projection ne soit déviée par l'unité de déviation (11) ou avec la déviation de la partie réfléchie de la lumière de projection.

3. Dispositif d'affichage de lunettes AR (18) selon la revendication précédente, **caractérisé en ce que**
l'unité de filtrage multiplex (12) comporte au moins deux éléments filtrants de polarisation formés pour un procédé de multiplexage de polarisation et/ou au moins deux éléments filtrants de longueur d'onde formés pour un procédé de multiplexage de longueur d'onde et/ou au moins deux éléments filtrants d'obturation formés pour un procédé de multiplexage temporel.

4. Dispositif d'affichage de lunettes AR (18) selon la revendication précédente, **caractérisé en ce que**
l'unité de filtrage multiplex (12) comporte une pluralité d'éléments filtrants d'obturation (1001, 1002, 1003, 1004, 1009) conçus pour le procédé de multiplexage temporel, qui sont chacun
affectés à l'un des deux groupes (1005, 1006, 1007, 1008) d'éléments filtrants d'obturation, et qui sont disposés respectivement comme élément filtrant de pixel d'obturation (1009) dans un agencement matriciel d'éléments filtrants d'obturation ou comme élément filtrant de ligne d'obturation (1001, 1002, 1003, 1004) dans un agencement de ligne d'éléments filtrants d'obturation.

5. Dispositif d'affichage de lunettes AR (18) selon l'une des revendications précédentes, **caractérisé en ce que**
l'unité de déviation (11) comporte au moins un élément de division de faisceau et un élément de miroir, l'élément de miroir et l'au moins un élément de division de faisceau étant chacun adaptés pour diriger la partie de la lumière de projection réfléchie en retour vers l'utilisateur dans une partie correspondante dans l'oeil de l'utilisateur.

6. Dispositif d'affichage de lunettes AR (18) selon l'une des revendications précédentes, **caractérisé en ce que**
l'unité de projection (13) comporte deux groupes d'éléments de projection qui sont respectivement associés à un oeil de l'utilisateur, chaque groupe d'éléments de projection présentant au moins un élément de projection par lequel une composante de lumière de projection respective peut être émise dans l'environnement, les éléments de projection étant notamment disposés en ligne.

7. Dispositif d'affichage de lunettes AR (18) selon la revendication précédente, **caractérisé en ce que**
les groupes d'éléments de projection comportent chacun trois éléments de projection différents qui sont conçus pour émettre une composante de lumière de projection spécifique, en particulier des composantes de lumière de projection de différentes couleurs, de préférence avec une couleur rouge et une couleur verte et une couleur bleue.

8. Dispositif d'affichage de lunettes AR (18) selon l'une des revendications précédentes, **caractérisé par**
une unité de détection de position (181) disposée sur l'unité de lunettes, qui est conçue pour détecter une position et/ou un changement de position de l'unité de lunettes, l'unité de projection (13) étant conçue pour émettre la lumière de projection (131) en fonction de la position et/ou du changement de position détecté(e) par l'unité de détection de position (181).

9. Dispositif d'affichage de lunettes AR (18) selon la revendication précédente, **caractérisé en ce que**
l'unité de détection de position (181) est conçue pour détecter un angle d'inclinaison de l'unité de lunettes par rapport à un axe vertical de l'utilisateur et/ou une rotation autour de l'axe vertical
avec un angle de rotation correspondant, l'unité de projection (13) étant en particulier conçue pour émettre une lumière de projection (131) uniquement selon un angle d'inclinaison qui est inférieur à un angle d'inclinaison limite prédéfini.

10. Système d'affichage de lunettes AR avec un dispositif d'affichage de lunettes AR (18) selon l'une des revendications précédentes et une surface de réflexion (16) disposée dans l'environnement du dispositif d'affichage de lunettes AR (18), en particulier une surface de réflexion (16) disposée horizontalement, de préférence une surface de rétro-réflexion, la surface de réflexion (16) étant disposée plus préférablement sur un plafond d'un espace intérieur.

11. Procédé d'affichage d'une image virtuelle dans un champ de vision d'un utilisateur, avec les étapes suivantes :
- projection d'une lumière de projection (131) en tant qu'information d'image générée par ordinateur (14) à l'écart de l'utilisateur dans une zone d'environnement hors du champ de vision de l'utilisateur ;
- réflexion de la lumière de projection (131) dans la zone de l'environnement hors du champ de vision de l'utilisateur ;
- déviation d'une partie réfléchie vers l'utilisateur de la lumière de projection réfléchie dans un oeil (10) de l'utilisateur, de sorte que l'image virtuelle (15) est affichée dans l'oeil (10) de l'utilisateur conformément à l'information d'image générée par ordinateur.
